# EUROPEAN PATENT SPECIFICATION

(11) **EP 3 365 506 B1**
(45) Date of publication and mention of the grant of the patent: **05.05.2021**
(21) Application number: 16856487.0
(22) Date of filing: 20.10.2016
(51) Int. Cl.: E04B 1/76, F28D 20/02, C09K 5/02, C09K 5/06, F16L 59/02, E04B 1/74, B32B 27/40, B32B 29/02, B32B 37/12, B32B 37/24

(54) **INSULATION MATERIAL ARRANGEMENT AND METHOD FOR FORMING AN INSULATION MATERIAL**
DÄMMSTOFFANORDNUNG UND VERFAHREN ZUR HERSTELLUNG EINES DÄMMSTOFFES
AGENCEMENT DE MATÉRIAU D'ISOLATION ET PROCÉDÉ DE MISE EN FORME DE MATÉRIAU D'ISOLATION

(30) Priority: 23.10.2015 AU 2015904353; 29.04.2016 AU 2016901576
(43) Date of publication of application: 29.08.2018
(73) Proprietor: Schmetzer Industries Holdings Pty Ltd, Hornsby, NSW 2077 (AU)
(72) Inventor: SCHMETZER, Brett Anthony, New Lambton, New South Wales 2305 (AU); STEVEN JOHN, Schmetzer, Fletcher, New South Wales 2287 (AU)
(74) Representative: Appleyard Lees IP LLP
(86) International application number: PCT/AU2016/050983
(87) International publication number: WO 2017/066832

(56) References cited:
- US-A- 5 162 397
- US-A- 5 532 039
- US-A- 5 637 389
- US-A1- 2003 029 862
- US-A1- 2003 124 278
- US-A1- 2003 124 318

## Description

### Related Applications

This application claims priority from Australian provisional patent applications nos. 2015904353 filed 23 Oct 2015 and 2016901576 filed 29 April 2016.

### Technical Field

The invention relates to an insulation material arrangement with the features of claim 1, such an arrangement including a phase change material, and a method for forming an insulation material including a phase change material, with the features of claim 12.

### Background

Insulation is desirable, and often required, to be placed in building structures such as insulating a wall or ceiling. Accordingly, various types of insulation materials have been proposed including those that include phase change materials.

An R-value is a unit of thermal resistance for a particular material or assembly of materials (such as an insulation panel). The R-value depends on a solid material's resistance to conductive heat transfer.

Phase change materials are materials that change phase to absorb or release heat causing a change in the "state" or " base" of the materials from a solid to a liquid. Generally, the heat applied to a phase change material is "consumed" by the material during its conversion from solid state to liquid state while the phase change material maintains a substantially constant temperature. In reverse, the heat that was absorbed by the change to the liquid phase is released when the phase change material gives up its latent heat of liquidation and turns into its solid state. Accordingly, the incorporation of phase change materials allows insulation material to better insulate building structures.

One such insulation material is disclosed in US 5,626,936 that discloses a thermal insulation system suitable for placement in a ceiling or wall structure of a building or dwelling, and the system includes phase change material ("PCM") usually sandwiched as an intermediate layer between two other layers of insulative material.

The disclosed PCM material is disclosed as being phase change material is selected from the group consisting essentially of: calcium chloride hexahydrate, sodium sulfate, paraffin, Na₂ SO_{4.}10H₂ O, CaCl_{2.}6H₂ O, NaHPO_{4.}12H₂ O, Na₂ S₂ O_{3.}5H₂ O and NaCO_{3.}10H₂ O. The disclosed PCM is heated above its phase change state to being a liquid state in which it is applied, as a heated liquid, to the two other layers of insulative material. In use, the complete insulation material is then placed against building structures such as a ceiling or a wall.

A problem with this insulation material relates to ease and speed of use and, in particular, the ease and speed of application of this insulation material to surfaces within a building such as vertical walls, the underside of surfaces or wrapping around corners. Another problem with this insulation material is that it may be difficult and/or costly to manufacture as it requires heating to liquefy the PCM before applying the PCM to the insulation sheets. The heating may also limit the materials that may be applied to the PCM during manufacture, require additional waiting time or the heating may damage or limited the types of the PCM used. Yet another problem with this insulation material is that the material may need to be relatively thick to achieve desirable insulative properties and the material may not be suitable to provide an appropriate "R" value.

Another insulation material is disclosed in US 5,532,039 that includes a thermal barrier having two sheets and a phase change material (PCM) layer between the two layers. The two sheets are disclosed as being one of fabric, plastic, foil, film, paper or foam. The PCM layer is disclosed as including microencapsulated phase change material distributed throughout an adhesive mixture placed between the two sheets. The adhesive is disclosed as being a various types of foamed or flat latex or rubber compositions such as caulking and adhesive agents conventionally used in the construction.

A problem with this insulation material relates to the insulation or thermal properties and the suitability to be used as insulation for building structures such as walls and ceilings. Another problem with this insulation material is that the material may need to be relatively thick to achieve desirable the insulative properties and the material may not be suitable to provide an appropriate "R" value.

The invention disclosed herein seeks to overcome one or more of the above identified problems or at least provide a useful alternative. US 2003/124318 A1 discloses a material arrangement for insulating a building structure in an installed condition with the features of the preamble of claim 1, and a method of forming a laminated material arrangement with the features of the preamble of claim 12.

### Summary

A material arrangement for insulating a building structure in an installed condition, with the features of claim 1.

In an aspect, the at least one flexible reflective layers are provided in the form of first and second flexible reflective layers extending over each of the first and second flexible polymer foam layers.

In another aspect, the first and second reflective layers include aluminium foil.

In yet another aspect, the first and second reflective layers includes reflective white faced foil sarking.

In yet another aspect, the first and second flexible polymer foam layers are at least one of Polyethylene foam, Polyurethane foam, Polyvinyl chloride foam, Styrofoam, Polyimide foam, Silicone foam, Microcellular foam.

The phase change material layer includes foamed polymer material impregnated with an encapsulated phase change material.

In yet another aspect, the encapsulated phase change material is a micro-encapsulated phase change material.

In yet another aspect, the micro-encapsulated phase change material is provided in the form of a least one of beads and granules.

The foamed polymer material is a flexible silicone foamed polymer material.

In yet another aspect, the foamed polymer material is a polysiloxane polymer.

In yet another aspect, the arrangement is such that that R-value is greater than 0.2.

In yet another aspect, the thickness of the first and second flexible polymer foam layers is in the range of about 2 to 6mm.

In yet another aspect, the thickness of the flexible phase change material layer is in the range of about 1.5 to 5mm.

In yet another aspect, the flexible phase change material layer is thinner than each of the first and second flexible polymer foam layers.

In yet another aspect, the overall material has a thickness in the range of about 7 to 10mm.

In yet another aspect, the material arrangement has a preferred orientation.

In yet another aspect, the at least one flexible reflective layer is arranged to reflect in a direction away from an inside of the building structure such that the material arrangement has a preferred orientation.

In yet another aspect, the at least one flexible reflective layers are provided in the form of first and second flexible reflective layers extending over each of the first and second flexible polymer foam layers, each of the first and second flexible reflective layers including a backing and a reflective material, and wherein the reflective material of each of first and second flexible reflective layers is located toward a side of the material arrangement that faces an external environment in use.

In accordance with a second main aspect there is provided, material arrangement for insulating a building structure in an installed condition, the material arrangement including first and second flexible polymer foam layers and a flexible phase change material layer between the first and second flexible polymer foam layers, and respective first and second reflective layers including foil are provided over each of the first and second flexible polymer foam layers, and, wherein the flexible phase change material layer includes silicone foam impregnated with microencapsulated phase change material beads.

It is furthermore provided a method of forming a laminated material arrangement with the features of claim 12.

In an aspect, the steps for forming the flexible phase change material further include: Providing, a liquid mixture that is cold curable to provide a flexible foamed polymer; Introducing, an encapsulated phase material into the liquid mixture so as to be substantially dispersed throughout the liquid mixture; and Curing, the liquid mixture so as to form the flexible phase change material layer upon which the adhesive layer is applied.

In accordance with a fourth main aspect there is provided, insulation material formed by as method defined above and herein.

In accordance with a fifth main aspect there is provided, a building structure including an insulation material as defined above and herein.

In accordance with a sixth main aspect there is provided, a phase change material for a material arrangement, the phase change material including a silicone foam material impregnated with microencapsulated phase change material beads.

In accordance with a seventh main aspect there is provided, a sprayed impregnated silicone foam material including a silicone foam formed from spray mixing two part silicone base liquids in which one or both of the two part silicone base liquids is impregnated with microencapsulated phase change material beads.

### Brief Description of the Figures

The invention is described, by way of non-limiting example only, by reference to the accompanying figures, in which;
Figure 1 is a perspective view illustrating a material arrangement including PCM layer;
Figure 2 is a detailed sectional view illustrating the material arrangement as shown in Figure 1;
Figure 3 is a detail side cross sectional view illustrating a bead of the phase change material layer;
Figure 4a is a side perspective part cut-away view illustrating the material arrangement fitted to a roof of a building structure;
Figure 4b is a side sectional view illustrating the material arrangement fitted to the roof of the building structure;
Figure 4c is a side sectional view illustrating the material arrangement fitted to a wall of a building structure;
Figure 4d is a front perspective part cut-away view illustrating the material arrangement fitted to the wall of the building structure; and
Figure 5 is a perspective view of a machine adapted to perform a method for forming a material arrangement.

### Detailed Description

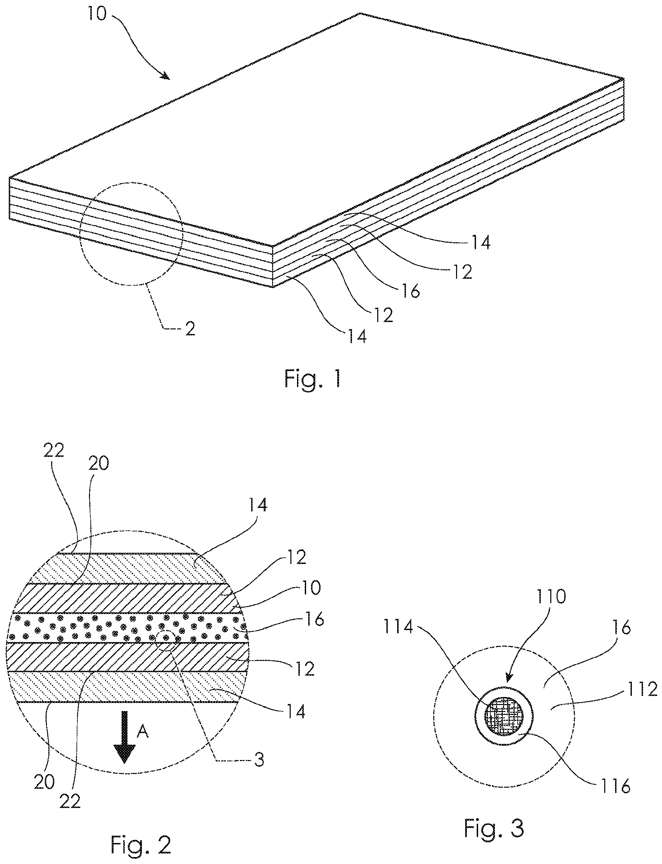

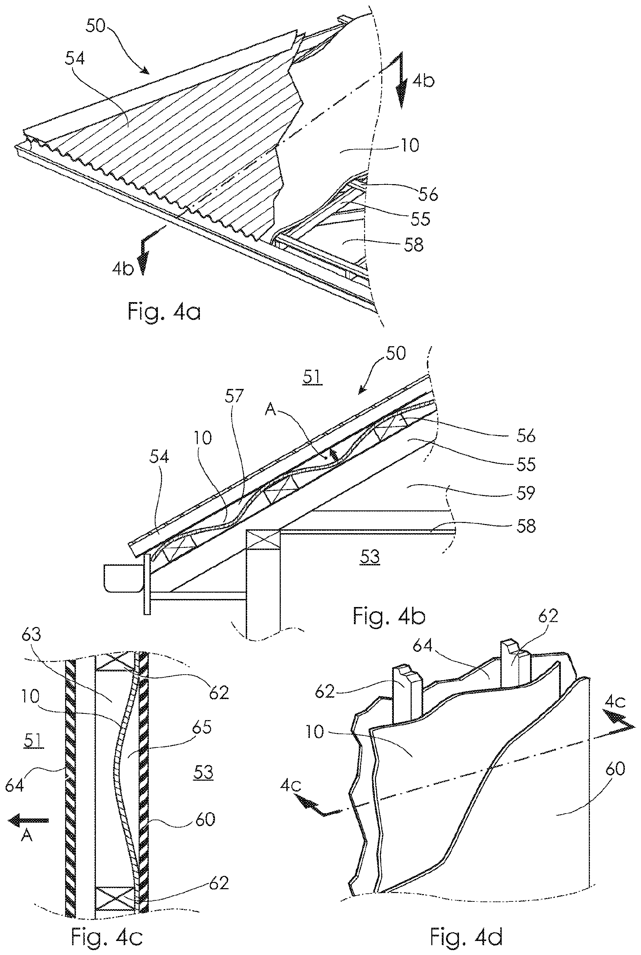

Referring to Figures 1 to 4d, there is shown a material arrangement 10 for insulating a building structure 50 such as a wall 52 (shown in Figure 4c). The material arrangement 10 includes first and second flexible polymer foam layers 12 and a flexible phase change material layer 16 between the first and second flexible polymer foam layers 12, and respective first and second reflective layers 14 provided or extending over each of the first and second flexible polymer foam layers 12. It is noted that in some examples one of the first and second reflective layers 14 may be omitted.

The first and second reflective layers 14 include a reflective material 20 such as aluminium foil. Preferably, the first and second reflective layers 14 are provided in the form of sarking including of the reflective material 20 such as aluminium foil laminated onto paper or plastic backing 22 with a flame retardant adhesive and fibreglass reinforcing mesh. The backing 22 may be a white film or the like. Such sarking is commercially available in sheet or coil form.

The reflective foil side 20 of the layers 14 are both preferably oriented away from the building structure 50, and toward the external environment 51, in the installed condition as shown in Figures 4a to 4d. This gives the material arrangement 10 a preferred orientation "A", as shown in Figure 2, in which backing 22 of the reflective layers 14 is fitted toward an inside 53 of the building structure 50 and the reflective foil side 20 is oriented or arranged toward the external environment 51. It is noted the reflective foil side 20 may be anti-glare foil.

The first and second flexible polymer foam layers 12 are preferably one of Polyethylene Foam, Polyurethane foam, Polyvinyl chloride foam, Styrofoam, Polyimide foam, Silicone foam, Microcellular foam. Most preferably, the flexible polymer foam layers 12 are closed cell Polyethylene foam such as a recycled, fireproof EVA foam. The thickness of the first and second flexible polymer foam layers 12 may be in the range of about 2 to 6mm.

The first and second flexible polymer foam layers 12 may be bonded with a suitable contact adhesive to the respective first and second reflective layers 14. It is noted that the flexible polymer foam layers 12 may differ in composition and thickness and/or density to one another.

The PCM layer 16, as is preferably a flexible foam polymer such silicone foam that is impregnated with micro-encapsulated phase change material beads or granules 110, as is best shown in Figures 2 and 3. The PCM layer is affixed and sandwiched between the first and second flexible polymer foam layers 12. The specific composition of the PCM material and method of manufacture is further described below. The thickness of the PCM layer 16 may be in the range of about 1 mm to 5 mm. The PCM layer 16 may be thinner or about the same thickness as the flexible polymer foam layers 12.

### The Phase Change Material ("PCM") Layer

As shown in Figures 2 and 3, The PCM layer 16 preferably includes encapsulated phase change material beads or granules 110 that are preferably mixed with and set into a layer of preferably foamed polymer 112 to form the PCM layer 16.

As shown in detail in Figure 3, each bead 110 includes a bead shell 116 that encapsulates a phase change material 114. The phase change material 114 may be composed of any one of a number of known phase change materials, including natural and synthetic gels, waxes, oils and/or salt-hydrates, such as paraffin wax. Preferably the phase change material 114 is selected to phase transition at a temperature of between 15°C and 30°C, more preferably between a temperature of between 20°C and 25°C, and most preferably at around 23°C. The bead shells 116 may be composed of rigid plastic, although it is also envisaged that the bead shells 116 could also be composed of a resilient polymer or plastic.

The foamed polymer may be composed of a resilient and flexible polysiloxane polymer such as silicone, and most preferably the foamed polymer is silicone foam. Silicone foam has been selected due to its ability to cure with a relatively large quantity, say, 25%, of micro encapsulated phase change material beads within the mixture. Silicone foam also has cold curing properties, flexibility, as well as has favourable thermal, latent heat storage and fire retardant properties. However, in other examples, it is also envisaged that the polymer in the PCM layer may be composed of other plastics such as polyurethane and/or polypropylene. Preferably, the polymer used in the PCM layer is chosen for suitable properties of flexibility and resilience.

In the preferred example, the foamed polymer is a silicone foam that is formed or cast from two-part liquid silicone base compounds (Part A & Part B) that are mixed and cold cured to form the silicone foam. It is noted that the cold curing assists to reduce any damage to the encapsulated phase change material.

The encapsulated phase change material may be added to one, or preferably both, of the two-part liquid silicone bases prior to the two-part liquid silicone bases being mixed. The mixing may occur in a mould or other suitable surface (such as an aluminium mould). This allows the encapsulated phase change material, which are preferably microencapsulated phase change material beads, to become substantially evenly distributed throughout the silicone foam. A suitable two-part silicone base is produced by supplier Shenzhen Hong Ye Jie Technology Co., Ltd (Product Name HY - F663). Tables 1 and 2 below show example compositions of a suitable Part A and Part B that are mixed to form the silicone foam.

**Table 1: Example Composition of Part A**

| **Component** | **CAS No.** | **EC#** | **In % By Weight** |
|---|---|---|---|
| Vinyl silicone oil | 68038-19-2 | --- | 35 |
| Fumed Silicon Dioxide | 60676-86-0 | 293-303-4 | 50 |
| Dimethyl Polysiloxane | 63148-62-9 | 203-492-7 | 14 |
| Chloroplatinic Acid | 18497-13-7 | 241-010-7 | 1 |

**Table 2: Example composition of Part B**

| **Component** | **CAS No.** | **EC#** | **In % By Weight** |
|---|---|---|---|
| Vinyl silicone oil | 68038-19-2 | --- | 35 |
| Fumed Silicon Dioxide | 60676-86-0 | 293-303-4 | 50 |
| Dimethyl Polysiloxane | 63148-62-9 | 203-492-7 | 14 |
| Hydrogen-containing Silicone Oil | 63148-57-2 | 217-496-1 | 1 |

The microencapsulated phase change material beads may be commercial available from Supplier Hangzhou Phase Change Technology Co., Ltd. The diameter of the beads may be about 1-2 micron minimum and the phase change material is an Organic PCM (Paraffin wax) having a melting temperature in the range of 20-30 degrees Celsius (other temperature range is available for customized application) and preferably about 23 degree Celsius. The latent heat capacity in about 100-120 J/g.

In the examples, herein the PCM layer is about 1 to 5mm in thickness. Although, the thickness may be varied depending on the application. The ratio, by bulk volume, of the microencapsulated phase change material beads to the two-part liquid silicone bases may preferably be about 1:3 (being 1 part beads to 3 parts liquid). It is noted that this ratio may be varied between about 1:2 and 1:4. However, at a ratio of 1:2 the additional beads may interfere with the curing and become unevenly distributed, and at 1:4 the lower amount for beads may reduce the thermal capacity of the PCM layer.

### Test Results & Example Dimensions

Table 3 below provides thermal properties of the preferred example of the material arrangement 10 as shown in Figures 1 and 2. The tested preferred example had the following properties:
- First and second reflective layers: reflective anti-glare foil sarking having a (colour : Reflective white faced foil sarking);
- First and second polymer foam layers: 3mm polyethylene closed cell foam 35kg/m3; and
- PCM Layer: 2mm silicone closed cell foam 320kg/m3 with 150g/m2 micro encapsulated phase change material.

**Table 3: Test Results**

| **General** | | | |
|---|---|---|---|
| Test Apparatus | Lasercomp Fox 600 | | |
| Sample Orientation | Horizontal | | Degrees Centigrade |
| Temperature Differential | 20 | | Degrees Centigrade |
| Estimated uncertainty in results | 3.9 | | % |

| **Specimen** | No. 1 | No. 1 | Units |
|---|---|---|---|
| Specimen Thickness | 9.5 | 9.5 | mm |
| Specimen Density | 9.5 | 9.5 | mm |
| Test Duration | 2:17 | 1:18 | hrs:mins |
| Measured Heat Flux | 86.8 | 86.4 | W/m² |
| Measured Thermal Conductivity | 0.0415 | 0.0414 | W/m.k |
| Thermal Resistance "R" | 0.23 | 0.23 | M²K/W |

The test results demonstrate that the material arrangement 10 including the PCM layer 16 exhibits thermal properties making it suitable for the material arrangement to be substituted for existing insulation materials such as fibre glass batts or lightweight foam insulation. The test results reflect an R-Value (Resistance value). The R-value of 0.20 is required to satisfy "thermal break in steel framed building" requirements of the Building Code of Australia. The R-value is created by the layering of the material arrangement 10 having polymer foam layers 12, the PCM layer 16 and the assistance of the reflectance of the foil sarking layers 14, combined with a reflected air space above and below to create a higher resistance of heat flow. The resistance of the foil 14 & outer foams 12 dampen the extremities of the ambient temperatures that the PCM layer 16 is controlling.

### Method of Use & Applications

As shown in Figures 4a to 4d, in use, a method of applying or installing the insulation material 10 to a building structure 50 such as a wall 52 or roof surface 54 may include fitting or arranging the insulation material 10 relative to the wall 52 or roof surface 54 in a preferred orientation with the foil reflective sides (20) of the reflective layers (14) facing toward the external environment as shown by arrow "A" in Figures 4a and 4c.

More specifically, in Figures 4a and 4b, the insulation material 10 may be fitted to a building structure 50 having a roof surface or sheet 54 supported by rafters or trusses 55 and purlins 56. The insulation material 10 is arranged to extend parallel to the rafters 55 and roof sheets 54 to assist with the vapour barrier effect of the insulation material 10.

The purlins 56 and/or trusses 55 also support a suspended ceiling 58 that may be plasterboard. The insulation material 10 may be rolled out over the purlins 56 and sags between the purlins 56 thereby having an air gap 57 between the roof surface 54 and the insulation material 10. There is also an air gap 59 between the underside of the insulation material 10 and the suspended ceiling 58. An example of the insulation properties of this arrangement are provide below in Table 4.

**Table 4: Example "R" Value for Example Roof Installation of the Insulation Material**

| **Roof** - Element | Heat flow up (winter) | Heat flow down (summer) |
|---|---|---|
| Metal Sheeting 0.42 to 1.2 mm (colourbond or similar) (54) | 0.00 | 0.00 |
| Airspace roof/ceiling parallel. 22.5 deg. Pitch 40mm airgap - next to one antiglare surface - unventilated. (57) | 0.4 | 0.72 |
| Insulation Material (10) | 0.23 | 0.23 |
| Airspace roof/ceiling parallel. 02 deg. Pitch 100mm - 600mm airgap - next to one reflective or antiglare surface - unventilated. (59) | 0.53 | 1.72 |
| Plasterboad 13mm - 880 kg/m3 (58) | 0.08 | 0.08 |
| Total R Value | 1.23 | 2.75 |

Referring to Figure 4c and 4db, the insulation material 10 may in other uses be fitted to a building structure 50 having a wall 54 with a inner wall panel 60 formed of plasterboard or the like, wall studs 62 and an outer cladding 64. The insulation material 10 is fitted between the wall studs 62 and an outer cladding 64 and oriented in direction "A". There is an air gap 62 between the outer cladding 64 and the insulation material 10, and an air gap 65 between the insulation material 10 and the inner wall panel 60.

**Table 4: Example "R" Value for Example Wall Installation of the Insulation Material**

| **Wall** - Element | Heat flow up (winter) | Heat flow down (summer) |
|---|---|---|
| External Cladding (64) | 0.00 | 0.00 |
| Airspace wall - vertical 20-90 mm airgap - next to one reflective surface - unventilated. (63) | 0.61 | 0.61 |
| Insulation Material (10) | 0.23 | 0.23 |
| Airspace wall - vertical 20-90 mm airgap - next to one antiglare surface - unventilated. (65) | 0.52 | 0.52 |
| Plasterboad 13mm - 880 kg/m3 (60) | 0.06 | 0.06 |
| Total R Value | 1.37 | 1.37 |

In the above examples, the insulation material 10 may be applied in a thickness, typically about 8mm overall, that increases the "R-value" of the building structure or material to which the insulation material is fitted. It noted that the insulation material 10 combines the phase change process as described above while still maintaining an installed R-Value (heat flow down/summer) greater than Roof R2.5 and Walls R1.3 (excluding resistance of external cladding material). Moreover, the insulation material 10 t combines the phase change process as described above while still maintaining an R-Value greater than R0.20 as required under the Australian building code for thermal break.

### Method of Forming the Insulation Material

Methods to produce the insulation material including the PCM layer may vary from manual mixing through to the use of industrial sized machines. Manual mixing may include firstly providing the first and second polymer foam layers 12, and first and second reflective layers 14 suitable to respectively coextensively cover the first and second polymer foam layers 12. Respective pairs of the first and second polymer foam layers 12, and first and second reflective layers 14 may be bonded together using a contact adhesive.

The microencapsulated phase change material beads may then be mixed into the two part silicone bases. The two part silicone bases are then mixed together prior to pouring or spraying the mixture between the respective first and second polymer foam layers 12. The PCM layer is then allowed to cold cure prior that bonds the first and second polymer foam layers 12 together.

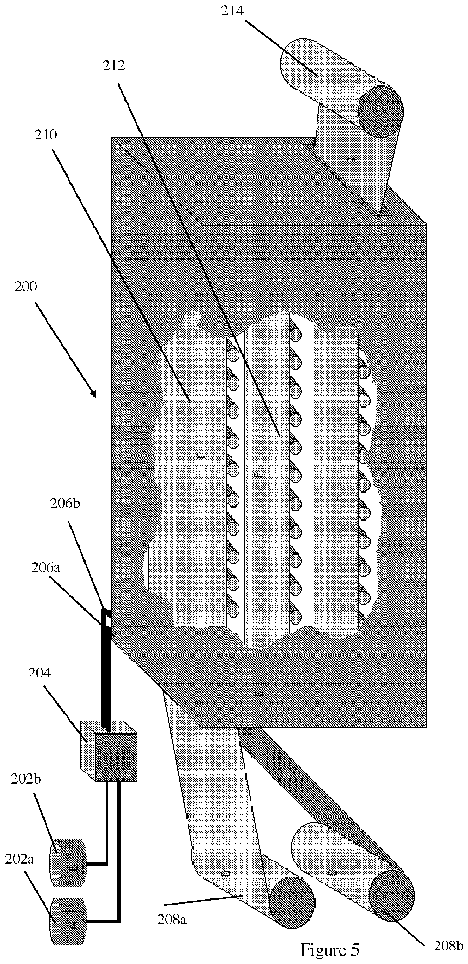

Referring to Figure 5, there is shown an example of such an industrial sized machine 200 for producing the material arrangement. The machine 200 is fed with each of the two-part liquid silicone bases 202a "A", 202b "B" being premixed with microencapsulated phase change material beads and then the pumped separately to a manifold 204 "C" having two spray nozzles 206a, 206b. The machine 200 is also fed with pre-formed pairs 208a, 208b "D" of the first and second polymer foam layers 12, and the first and second reflective layers 14 have been bonded together using a contact adhesive. The pre-formed pairs 208a, 208b may differ to one another.

Each of the two-part liquid silicone bases 202a, 202b are spayed or ejected from the nozzles 206a, 206b so as to cross-over, mixing in the air after which being disposed on inner surfaces of the first and second polymer foam layers 12 between which the silicone foam then cold cures, preferably with some ventilation assistance, and becomes bonded between the first and second polymer foam layers 12 and the outer reflective layers 14. The machine 200 may include rollers 210 and a climate controlled chamber 216 "E" through which the material arrangement 10 passes, in this example via a triple pass "F" whilst curing. The insulation material 10 may be formed in lengths that are rolled to form a roll prior 214 "G" to being stored and/or transported.

Advantageously, there has been a material arrangement including a PCM layer sandwiched between polymer foam layers, and outer reflective layers. The PCM layer that preferably includes silicone foam impregnated with distributed microencapsulated phase change material beads enables the material arrangement to significantly improve the thermal insulation properties of the building surface to which it is applied. Moreover, the use of silicone foam provides fire retardant properties to further enhance the first resistance of building structure.

The use of two-part cold cured silicone foam bases also enables the pre-mixing of the microencapsulated phase change material beads within the silicone foam bases that assist with even distribution of the beads, and the cold curing of the mix assist to inhibit damage to the microencapsulated phase change material beads.

The sandwiching of the PCM layer between insulative foam layers allows the PCM layer to thermally dampen the extremities of the ambient temperatures to which the PCM layeris exposed, and the outer reflective foil layers assist the overall arrangement to achieve an R-value suitable to replace existing insulation materials with a more effective and generally thinner insulative material arrangement. Moreover, the insulation material allows a single sheet to be provided in place of several sheets that are currently used.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

The reference in this specification to any known matter or any prior publication is not, and should not be taken to be, an acknowledgment or admission or suggestion that the known matter or prior art publication forms part of the common general knowledge in the field to which this specification relates.

While specific examples of the invention have been described, it will be understood that the invention extends to alternative combinations of the features disclosed or evident from the disclosure provided herein, within the scope of the appended claims.

Many and various modifications will be apparent to those skilled in the art without departing from the scope of the invention disclosed or evident from the disclosure provided herein, within the scope of the appended claims.

## Claims

1. A material arrangement (10) for insulating a building structure (50) in an installed condition, the material arrangement (10) including first and second flexible polymer foam layers (12) and a flexible phase change material layer (16) between the first and second flexible polymer foam layers (12), and at least one flexible reflective layer (14) extending over at least one of the first and second flexible polymer foam layers (12), **characterised in that**
the phase change material layer includes a fire-retardant flexible silicone foamed polymer material which is impregnated with an encapsulated solid to liquid phase change material.

2. The material arrangement according to claim 1, wherein the at least one flexible reflective layers are provided in the form of first and second flexible reflective layers extending over each of the first and second flexible polymer foam layers.

3. The material arrangement according to claim 2, wherein the first and second reflective layers include aluminium foil, or wherein the first and second reflective layers includes reflective white faced foil sarking.

4. The material arrangement according to claim 1, wherein the first and second flexible polymer foam layers are at least one of Polyethylene Foam, Polyurethane foam, Polyvinyl chloride foam, Styrofoam, Polyimide foam, Silicone foam, Microcellular foam.

5. The material arrangement according to claim 1, wherein the encapsulated phase change material is a micro-encapsulated phase change material provided in the form of a least one of beads and granules.

6. The material arrangement according to claim 1, wherein the foamed polymer material is a polysiloxane polymer.

7. The material arrangement according to claim 1, wherein the arrangement is such that that R-value is greater than 0.2.

8. The material arrangement according to claim 1, wherein the thickness of the first and second flexible polymer foam layers is in the range of about 2 to 6mm and/or the thickness of the flexible phase change material layer is in the range of about 2 to 6mm.

9. The material arrangement according to claim 1, wherein the flexible phase change material layer is thinner than each of the first and second flexible polymer foam layers.

10. The material arrangement according to claim 1, wherein the material arrangement has a preferred orientation, wherein suitably the at least one flexible reflective layer is arranged to reflect in a direction away from an inside of the building structure such that the material arrangement has a preferred orientation.

11. The material arrangement according to claim 1, wherein the at least one flexible reflective layers are provided in the form of first and second flexible reflective layers extending over each of the first and second flexible polymer foam layers, each of the first and second flexible reflective layers including a backing and a reflective material, and wherein the reflective material of each of first and second flexible reflective layers is located toward a side of the material arrangement that faces an external environment in use.

12. A method of forming a laminated material arrangement (10), the method including the steps of:
providing a first and second polymer foam layers (12) and first and second reflective layers (14) suitable to respectively coextensively cover the first and second polymer foam layers (12);
bonding the first and second reflective layers (14) to outer faces of the first and second polymer foam layers (12); and
forming a flexible phase change material layer (16) between inner faces of the first and second polymer foam layers (12) such that the flexible phase change material layer (16) is sandwiched between the inner faces of the first and second polymer foam layers (12);
**characterised in that**
the flexible phase change material layer (16) includes a fire-retardant flexible silicone foamed polymer material which is impregnated with an encapsulated solid to liquid phase change material.

13. The method according to claim 12, wherein the steps for forming the flexible phase change material further include:
providing, a liquid mixture that is cold curable to provide a flexible foamed polymer;
introducing, an encapsulated phase material into the liquid mixture so as to be substantially dispersed throughout the liquid mixture; and
curing, the liquid mixture so as to form the flexible phase change material layer upon which the adhesive layer is applied.

14. A building structure including a material arrangement for insulating a building structure in an installed condition as defined in any one of claims 1 to 11.

## Patentansprüche

1. Materialanordnung (10) zum Isolieren einer Gebäudestruktur (50) in einem eingebauten Zustand, wobei die Materialanordnung (10) eine erste und eine zweite flexible Polymerschaumstoffschicht (12), eine flexible Phasenwechselmaterialschicht (16) zwischen der ersten und der zweiten flexiblen Polymerschaumstoffschicht (12) und wenigstens eine flexible Reflexionsschicht (14), die sich über wenigstens eine von der ersten und der zweiten flexiblen Polymerschaumstoffschicht (12) erstreckt, umfasst, **dadurch gekennzeichnet, dass**
die Phasenwechselmaterialschicht ein flammhemmendes flexibles Siliconschaumstoffpolymermaterial umfasst, das mit einem verkapselten Fest-zu-flüssig-Phasenwechselmaterial imprägniert ist.

2. Materialanordnung gemäß Anspruch 1, wobei die wenigstens eine flexible Reflexionsschicht in der Form einer ersten und einer zweiten flexiblen Reflexionsschicht bereitgestellt ist, die sich über jede von der ersten und der zweiten flexiblen Polymerschaumstoffschicht erstrecken.

3. Materialanordnung gemäß Anspruch 2, wobei die erste und die zweite Reflexionsschicht Aluminiumfolie umfassen, oder wobei die erste und die zweite Reflexionsschicht eine reflexionsfähige Folienbahn mit weißer Oberfläche umfassen.

4. Materialanordnung gemäß Anspruch 1, wobei die erste und die zweite flexible Polymerschaumstoffschicht wenigstens eines von Polyethylenschaumstoff, Polyurethanschaumstoff, Polyvinylchloridschaumstoff, Styroschaumstoff, Polyimidschaumstoff, Siliconschaumstoff, mikrozelligem Schaumstoff ist.

5. Materialanordnung gemäß Anspruch 1, wobei das verkapselte Phasenwechselmaterial ein mikroverkapseltes Phasenwechselmaterial ist, das in der Form von wenigstens einem von Perlen und Granulat bereitgestellt ist.

6. Materialanordnung gemäß Anspruch 1, wobei das geschäumte Polymermaterial ein Polysiloxanpolymer ist.

7. Materialanordnung gemäß Anspruch 1, wobei die Anordnung so ist, dass der R-Wert größer als 0,2 ist.

8. Materialanordnung gemäß Anspruch 1, wobei die Dicke der ersten und der zweiten flexiblen Polymerschaumstoffschicht in dem Bereich von etwa 2 bis 6 mm liegt und/oder die Dicke der flexiblen Phasenwechselmaterialschicht in dem Bereich von etwa 2 bis 6 mm liegt.

9. Materialanordnung gemäß Anspruch 1, wobei die flexible Phasenwechselmaterialschicht dünner als jede von der ersten und der zweiten flexiblen Polymerschaumstoffschicht ist.

10. Materialanordnung gemäß Anspruch 1, wobei die Materialanordnung eine bevorzugte Orientierung aufweist, wobei geeignet wenigstens eine flexible Reflexionsschicht angeordnet ist, um in einer Richtung weg von einer Innenseite der Gebäudestruktur zu reflektieren, so dass die Materialanordnung eine bevorzugte Orientierung aufweist.

11. Materialanordnung gemäß Anspruch 1, wobei die wenigstens eine flexible Reflexionsschicht in der Form einer ersten und einer zweiten flexiblen Reflexionsschicht bereitgestellt ist, die sich über jede von der ersten und der zweiten flexiblen Polymerschaumstoffschicht erstrecken, wobei jede von der ersten und der zweiten flexiblen Reflexionsschicht einen Träger und ein reflexionsfähiges Material umfasst, und wobei das reflexionsfähige Material von jeder von der ersten und der zweiten flexiblen Reflexionsschicht zu einer Seite der Materialanordnung hin angeordnet ist, die in Verwendung zu einer Außenumgebung zeigt.

12. Verfahren zur Herstellung einer laminierten Materialanordnung (10), wobei das Verfahren die Schritte umfasst:
Bereitstellen einer ersten und einer zweiten Polymerschaumstoffschicht (12) und einer ersten und einer zweiten Reflexionsschicht (14), die geeignet sind, jeweils deckungsgleich die erste und die zweite Polymerschaumstoffschicht (12) zu bedecken;
Binden der ersten und der zweiten Reflexionsschicht (14) an Außenseiten der ersten und der zweiten Polymerschaumstoffschicht (12); und
Bilden einer flexiblen Phasenwechselmaterialschicht (16) zwischen Innenseiten der ersten und der zweiten Polymerschaumstoffschicht (12), so dass die flexible Phasenwechselmaterialschicht (16) zwischen den Innenseiten der ersten und der zweiten Polymerschaumstoffschicht (12) geschichtet ist;
**dadurch gekennzeichnet, dass**
die flexible Phasenwechselmaterialschicht (16) ein flammhemmendes flexibles SiliconschaumstoffPolymermaterial umfasst, das mit einem verkapselten Festzu-flüssig-Phasenwechselmaterial imprägniert ist.

13. Verfahren gemäß Anspruch 12, wobei die Schritte zur Herstellung des flexiblen Phasenwechselmaterials ferner umfassen:
Bereitstellen eines flüssigen Gemischs, das kalthärtbar ist, um ein flexibles geschäumtes Polymer bereitzustellen;
Einführen eines verkapselten Phasenmaterials in das flüssige Gemisch, so dass es im Wesentlichen in dem gesamten flüssigen Gemisch verteilt wird; und
Härten des flüssigen Gemischs, um die flexible Phasenwechselmaterialschicht zu bilden, auf die die Klebstoffschicht aufgebracht wird.

14. Gebäudestruktur, umfassend eine Materialanordnung zum Isolieren einer Gebäudestruktur in eingebautem Zustand gemäß einem der Ansprüche 1 bis 11.

## Revendications

1. Agencement de matériaux (10) destiné à isoler une structure de bâtiment (50) dans un état installé, l'agencement de matériaux (10) comportant des première et deuxième couches de mousse polymère souple (12) et une couche de matériau à changement de phase souple (16) entre les première et deuxième couches de mousse polymère souple (12), et au moins une couche réfléchissante souple (14) s'étendant au-dessus d'au moins une des première et deuxième couches de mousse polymère souple (12), **caractérisé en ce que**
la couche de matériau à changement de phase comporte un matériau polymère de silicone expansé souple ignifugeant qui est imprégné avec un matériau à changement de phase de solide à liquide encapsulé.

2. Agencement de matériaux selon la revendication 1, dans lequel l'au moins une couche réfléchissante souple est obtenue sous la forme de première et deuxième couches réfléchissantes souples s'étendant au-dessus de chacune des première et deuxième couches de mousse polymère souple.

3. Agencement de matériaux selon la revendication 2, dans lequel les première et deuxième couches réfléchissantes comportent une feuille d'aluminium, ou dans lequel les première et deuxième couches réfléchissantes comportent une feuille d'isolation extérieure de toiture à face blanche réfléchissante.

4. Agencement de matériaux selon la revendication 1, dans lequel les première et deuxième couches de mousse polymère souple en sont au moins une parmi la mousse de polyéthylène, la mousse de polyuréthane, la mousse de polychlorure de vinyle, la styromousse, la mousse de polyimide, la mousse de silicone, la mousse microcellulaire.

5. Agencement de matériaux selon la revendication 1, dans lequel le matériau à changement de phase encapsulé est un matériau à changement de phase micro-encapsulé obtenu sous la forme de billes et/ou de granules.

6. Agencement de matériaux selon la revendication 1, dans lequel le matériau polymère expansé est un polymère de polysiloxane.

7. Agencement de matériaux selon la revendication 1, l'agencement étant tel que la valeur R est supérieure à 0,2.

8. Agencement de matériaux selon la revendication 1, dans lequel l'épaisseur des première et deuxième couches de mousse polymère souple se situe dans la gamme d'environ 2 à 6 mm et/ou l'épaisseur de la couche de matériau à changement de phase souple se situe dans la gamme d'environ 2 à 6 mm.

9. Agencement de matériaux selon la revendication 1, dans lequel la couche de matériau à changement de phase souple est plus mince que chacune des première et deuxième couches de mousse polymère souple.

10. Agencement de matériaux selon la revendication 1, l'agencement de matériaux ayant une orientation préférée, l'au moins une couche réfléchissante souple étant adéquatement agencée pour réfléchir dans une direction s'éloignant d'un intérieur de la structure de bâtiment de telle sorte que l'agencement de matériaux a une orientation préférée.

11. Agencement de matériaux selon la revendication 1, dans lequel l'au moins une couche réfléchissante souple est obtenue sous la forme de première et deuxième couches réfléchissantes souples s'étendant au-dessus de chacune des première et deuxième couches de mousse polymère souple, chacune des première et deuxième couches réfléchissantes souples comportant un support et un matériau réfléchissant, et le matériau réfléchissant de chacune des première et deuxième couches réfléchissantes souples étant situé vers un côté de l'agencement de matériaux qui fait face à un environnement externe à l'usage.

12. Procédé de formation d'un agencement de matériaux stratifiés (10), le procédé comportant les étapes suivantes :
obtention de première et deuxième couches de mousse polymère (12) et de première et deuxième couches réfléchissantes (14) appropriées pour couvrir respectivement de façon coextensive les première et deuxième couches de mousse polymère (12) ;
collage des première et deuxième couches réfléchissantes (14) à des faces extérieures des première et deuxième couches de mousse polymère (12) ; et
formation d'une couche de matériau à changement de phase souple (16) entre des faces intérieures des première et deuxième couches de mousse polymère (12) de telle sorte que la couche de matériau à changement de phase souple (16) soit intercalée entre les faces intérieures des première et deuxième couches de mousse polymère (12) ;
**caractérisé en ce que**
la couche de matériau à changement de phase souple (16) comporte un matériau polymère de silicone expansé souple ignifugeant qui est imprégné avec un matériau à changement de phase de solide à liquide encapsulé.

13. Procédé selon la revendication 12, dans lequel les étapes de formation du matériau à changement de phase souple comportent en outre :
l'obtention d'un mélange liquide qui est durcissable à froid pour obtenir un polymère expansé souple ;
l'introduction d'un matériau de phase encapsulé dans le mélange liquide de manière à ce qu'il soit sensiblement dispersé dans tout le mélange liquide ; et
le durcissement du mélange liquide de manière à former la couche de matériau à changement de phase souple sur laquelle la couche adhésive est appliquée.

14. Structure de bâtiment comportant un agencement de matériaux destiné à isoler une structure de bâtiment dans un état installé tel que défini dans l'une quelconque des revendications 1 à 11.
